# EUROPÄISCHE PATENTSCHRIFT

(11) **EP 1 743 820 B1**
(45) Veröffentlichungstag und Bekanntmachung des Hinweises auf die Patenterteilung: **17.02.2010**
(21) Anmeldenummer: 05015462.4
(22) Anmeldetag: 15.07.2005
(51) Int. Cl.: B60T 8/88, B60T 13/74

(54) **Steuervorrichtung zum Ansteuern eines Stellantriebs**
Control device for actuation of a positioning drive
Dispositif de contrôle pour commander d'un actionneur

(43) Veröffentlichungstag der Anmeldung: 17.01.2007
(73) Patentinhaber: SIEMENS AKTIENGESELLSCHAFT, 80333 München (DE)
(72) Erfinder: Irsigler, Michael, 93053 Regensburg (DE); Ringlstetter, Manfred, 84187 Weng (DE)

(56) Entgegenhaltungen:
- WO-A-2004/108497
- DE-A1- 10 211 278

## Beschreibung

Die Erfindung betrifft eine mit einem Stellantrieb koppelbare Steuervorrichtung zum Ansteuern des Stellantriebs mit einer ersten Schnittstelleneinheit, über die der Steuervorrichtung ein erstes Steuersignal zuführbar ist, das repräsentativ für einen Steuerbefehl ist, und mit einer ersten Recheneinheit, die mit der ersten Schnittstelleneinheit gekoppelt ist, den Steuerbefehl zu empfangen und ein Stellsignal zum Ansteuern des Stellantriebs abhängig von dem Steuerbefehl zu erzeugen.

Eine solche Steuervorrichtung ist aus der WO 2004/108497 bereits bekannt. Die dort beschriebene Steuereinrichtung weist eine erste Schnittstelle auf, der ein Steuersignal eines Bedienelementes zugeführt wird. Eine erste Recheneinheit, die mit der ersten Steuereinheit gekoppelt ist, erzeugt in Abhängigkeit des erhaltenen Steuerbefehls ein Stellsignal, das zu einem Hydroaggregat oder einem pneumatischen Aggregat als Stellantrieb übertragen wird. Der Stellantrieb ist mit einer Reibbremse gekoppelt, die zum Abbremsen und Feststellen eines Fahrzeugs eingerichtet ist. Zum Verriegeln der Radbremse und zum energielosen Festhalten derselben dient ein zusätzlicher Elektromotor, der ebenfalls von der Steuereinheit angesteuert wird.

Ein Stellantrieb einer elektrisch steuerbaren Bremse in einem Kraftfahrzeug ist ausgebildet zum Erzeugen einer Bremskraft, die Bremsen des Kraftfahrzeugs zugeführt wird, die den Rädern des Kraftfahrzeugs zugeordnet sind. An das Ansteuern des Stellantriebs werden hohe Anforderungen bezüglich der Sicherheit und Zuverlässigkeit gestellt. Diese Anforderungen sind z.B. in den Regelungen 13 und 13H der UN Economic Commission, kurz: ECE, definiert.

Die Aufgabe der Erfindung ist, eine Steuervorrichtung der eingangs genannten Art zu schaffen, die zuverlässig, sicher und preisgünstig ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch eine Steuervorrichtung, die mit einem Stellantrieb koppelbar ist und die ausgebildet ist zum Ansteuern des Stellantriebs. Die Steuervorrichtung umfasst eine erste Schnittstelleneinheit, über die der Steuervorrichtung ein erstes Steuersignal zuführbar ist, das repräsentativ ist für einen Steuerbefehl. Die Steuervorrichtung umfasst eine zweite Schnittstelleneinheit, über die der Steuervorrichtung ein Entriegelungssignal zuführbar ist. Ferner umfasst die Steuervorrichtung eine erste Recheneinheit, die mit der ersten Schnittstelleneinheit gekoppelt ist zum Empfangen des Steuerbefehls und zum Erzeugen eines Stellsignals zum Ansteuern des Stellantriebs abhängig von dem Steuerbefehl. Die Steuervorrichtung umfasst ferner ein Schaltelement, das so elektrisch zwischen der ersten Recheneinheit und dem Stellantrieb angeordnet ist und mit der zweiten Schnittstelleneinheit gekoppelt ist, dass das Stellsignal in seiner Wirkung auf den Stellantrieb abhängig von dem Entriegelungssignal freigebbar und sperrbar ist. Das Freigeben und Sperren des Stellsignals ist unabhängig von einem Betriebszustand der ersten Recheneinheit.

Der Vorteil ist, dass der Stellantrieb nur dann angesteuert werden kann, wenn das Entriegelungssignal das Stellsignal freigibt. Dadurch kann sichergestellt werden, dass ein fehlerhaftes Verhalten oder ein fehlerhafter Betriebszustand der ersten Recheneinheit nicht zu einem unerwünschten Ansteuern des Stellantriebs führt. Dadurch kann eine besonders hohe Sicherheit und Zuverlässigkeit der Steuervorrichtung gewährleistet werden. Ferner kann dadurch auf eine zusätzliche Kontrollinstanz in der Steuervorrichtung, z.B. eine weitere Recheneinheit, verzichtet werden, die das unerwünschte Ansteuern des Stellantriebs verhindert. Dadurch kann die Steuervorrichtung preisgünstig ausgebildet sein. Ferner ist die Sicherheit und Zuverlässigkeit der Steuervorrichtung dadurch gegeben, dass die erste und die zweite Schnittstelleneinheit unabhängig voneinander ausgebildet sind oder das erste Steuersignal und das Entriegelungssignal der Steuervorrichtung über voneinander unabhängige Kommunikationskanäle zuführbar sind. Insbesondere ermöglicht dies einen sicheren und zuverlässigen Betrieb einer elektrisch steuerbaren Bremse, z.B. in einem Kraftfahrzeug. Der Steuerbefehl kann z.B. ein Anziehen oder ein Lösen der Bremse veranlassen oder erlauben.

In einer vorteilhaften Ausgestaltung der Steuervorrichtung ist die Steuervorrichtung so ausgebildet, dass die erste Recheneinheit durch das Entriegelungssignal aktiviert wird. Dies hat den Vorteil, dass nur eine Leitung erforderlich ist, um abhängig von dem Entriegelungssignal die erste Recheneinheit zu aktivieren und das Stellsignal freizugeben. Das Aktivieren der ersten Recheneinheit kann beispielsweise durch Zuführen einer geeigneten Versorgungsspannung erfolgen, so dass die erste Recheneinheit infolgedessen ihren Betrieb aufnimmt, oder durch Aufwecken der ersten Recheneinheit aus einem Ruhezustand.

In einer weiteren vorteilhaften Ausgestaltung der Steuervorrichtung umfasst die Steuervorrichtung eine dritte Schnittstelleneinheit, die mit der ersten Recheneinheit gekoppelt ist und über die der Steuervorrichtung ein zweites Steuersignal zuführbar ist, das repräsentativ ist für den Stellbefehl. Der Vorteil ist, dass die dritte Schnittstelleneinheit unabhängig von der ersten Schnittstelleneinheit ausgebildet sein kann und der Steuerbefehl der Steuervorrichtung so durch redundante Kommunikationskanäle zuführbar ist. Dadurch kann das Zuführen des Steuerbefehls besonders sicher und zuverlässig sein.

In diesem Zusammenhang ist es vorteilhaft, wenn der Steuerbefehl in dem zweiten Steuersignal frequenzkodiert ist. Ferner ist die erste Recheneinheit oder die dritte Schnittstelleneinheit ausgebildet zum Ermitteln des Steuerbefehls aus dem zweiten Steuersignal abhängig von einer Frequenz des zweiten Steuersignals. Dies hat den Vorteil, dass die Steuervorrichtung preisgünstig ausgebildet sein kann. Ferner ist ein zuverlässiges Übertragen des Steuerbefehls möglich.

In einer weiteren vorteilhaften Ausgestaltung der Steuervorrichtung ist die erste Recheneinheit ausgebildet zum Überprüfen der jeweils über die erste und die dritte Schnittstelleneinheit empfangenen Steuerbefehle. Ferner ist die Steuervorrichtung ausgebildet zum Freischalten einer Notsteuerfunktion, wenn der Steuerbefehl nur entweder von der ersten oder von der dritten Schnittstelleneinheit empfangen wird oder wenn die jeweils über die erste und die dritte Schnittstelleneinheit empfangenen Steuerbefehle unterschiedlich oder fehlerhaft sind. Dies hat den Vorteil, dass auch bei Ausfall eines der beiden Kommunikationskanäle sichergestellt werden kann, dass der Stellantrieb sicher ansteuerbar ist. Die elektrisch steuerbare Bremse kann so beispielsweise ein Bremsen des Kraftfahrzeugs ermöglichen, wenn entweder der Kommunikationskanal der ersten Schnittstelleneinheit oder der Kommunikationskanal der dritten Schnittstelleneinheit ausgefallen sein sollte.

In einer weiteren vorteilhaften Ausgestaltung der Steuervorrichtung ist die dritte Schnittstellenvorrichtung ausgebildet zum Senden eines Aktivitätssignals und/oder eines Datensignals von der ersten Recheneinheit an eine übergeordnete Steuereinheit, die mit der Steuervorrichtung koppelbar ist. Der Vorteil ist, dass durch das Datensignal z.B. eine Bestätigung zu einem empfangenen Steuerbefehl oder einen Zustand der Steuervorrichtung oder des Stellantriebs von der Steuervorrichtung an die übergeordnete Steuereinheit übertragbar ist. Gegebenenfalls kann auch eine Eingabeinformation, die der Steuervorrichtung über eine Eingabeeinheit zuführbar ist, einfach und zuverlässig an die übergeordnete Steuereinheit übertragen werden. Die Eingabeinformation entspricht beispielsweise dem Steuerbefehl zum Anziehen oder zum Lösen der Bremse des Kraftfahrzeugs.

In diesem Zusammenhang ist es vorteilhaft, wenn das Aktivitätssignal pulsförmig und maximal in einem vorgegebenen maximalen Abstand zueinander beabstandet oder kontinuierlich über die dritte Schnittstelleneinheit an die übergeordnete Steuereinheit gesendet wird. Dies hat den Vorteil, dass der übergeordneten Steuereinheit so mitgeteilt werden kann, dass die Steuervorrichtung betriebsbereit ist und dass der Steuervorrichtung der Steuerbefehl über die dritte Schnittstelleneinheit zugeführt und von der ersten Recheneinheit empfangen und verarbeitet werden kann. Ferner kann die übergeordnete Steuereinheit einen Ausfall dieses Kommunikationskanals als einen Fehler erkennen und gegebenenfalls z.B. an einen Fahrer des Kraftfahrzeugs melden.

In einer weiteren vorteilhaften Ausgestaltung der Steuervorrichtung ist das Aktivitätssignal oder sind Daten in dem Datensignal frequenzkodiert. Die erste Recheneinheit oder die dritte Schnittstelleneinheit sind ausgebildet zum Erzeugen des Aktivitätssignals beziehungsweise des Datensignals abhängig von einer dem Aktivitätssignal beziehungsweise dem jeweiligen Datum zugeordneten Frequenz. Dies hat den Vorteil, dass die Steuervorrichtung besonders einfach und preisgünstig ausgebildet sein kann und dass die Steuervorrichtung so ein zuverlässige Übertragen des Aktivitätssignals oder der Daten ermöglicht.

Ausführungsbeispiele der Erfindung sind im Folgenden anhand der schematischen Zeichnungen erläutert.

Es zeigen:
Figur 1 ein System umfassend eine Steuervorrichtung und eine übergeordnete Steuereinheit und
Figur 2 eine Ausführungsform der Steuervorrichtung und der übergeordneten Steuereinheit.

Elemente gleicher Konstruktion oder Funktion sind figurenübergreifend mit den gleichen Bezugszeichen versehen.

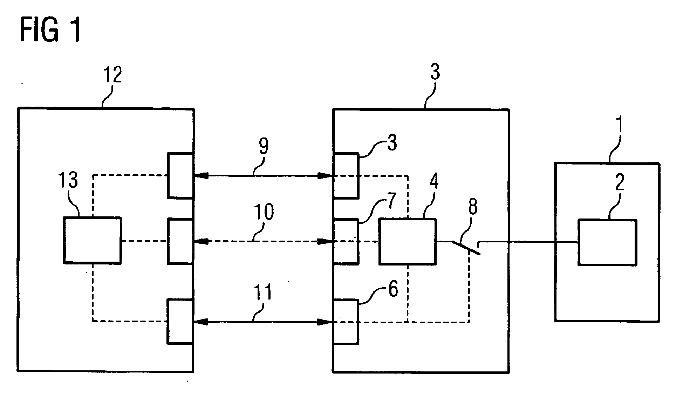

Eine elektrisch steuerbare Bremse 1 umfasst einen Stellantrieb 2, z.B. einen Elektromotor, durch den eine mit dem Stellantrieb 2 gekoppelte Bremse angezogen oder gelöst werden kann, wenn dieser geeignet angesteuert wird (Figur 1). Die elektrisch steuerbare Bremse 1 umfasst eine Steuervorrichtung 3 oder ist mit der Steuervorrichtung 3 gekoppelt. Die Steuervorrichtung 3 umfasst eine erste Recheneinheit 4. Die Steuervorrichtung 3 ist mit dem Stellantrieb 2 gekoppelt. Die erste Recheneinheit 4 ist ausgebildet zum Erzeugen eines Stellsignals zum Ansteuern des Stellantriebs 2.

Die Steuervorrichtung 3 umfasst eine erste Schnittstelleneinheit 5, eine zweite Schnittstelleneinheit 6 und eine dritte Schnittstelleneinheit 7, die mit der ersten Recheneinheit 4 gekoppelt sind. Vorzugsweise sind die erste Schnittstelleneinheit 5, die zweite Schnittstelleneinheit 6 und die dritte Schnittstelleneinheit 7 unabhängig voneinander ausgebildet oder voneinander unabhängigen Kommunikationskanälen zugeordnet. Die Steuervorrichtung 3 umfasst ferner ein Schaltelement 8, das elektrisch zwischen der ersten Recheneinheit 4 und dem Stellantrieb 2 angeordnet ist und das mit der zweiten Schnittstelleneinheit 6 gekoppelt ist.

Die Steuervorrichtung 3 ist über eine erste Steuerleitung 9, eine zweite Steuerleitung 10 und eine Entriegelungsleitung 11 mit einer übergeordneten Steuereinheit 12 koppelbar. Die übergeordnete Steuereinheit 12 umfasst eine zweite Recheneinheit 13 und jeweils eine weitere Schnittstelleneinheit, die der ersten Steuerleitung 9, der zweiten Steuerleitung 10 bzw. der Entriegelungsleitung 11 zugeordnet ist. Die zweite Recheneinheit 13 ist über die erste Steuerleitung 9 mit der ersten Schnittstelleneinheit 5 gekoppelt. Entsprechend ist die zweite Recheneinheit 13 über die zweite Steuerleitung 10 mit der dritten Schnittstelleneinheit 7 gekoppelt und über die Entriegelungsleitung 11 mit der zweiten Schnittstelleneinheit 6 gekoppelt.

Die übergeordnete Steuereinheit 12 ist ausgebildet zum Erzeugen eines Entriegelungssignals, das der Steuervorrichtung 3 über die Entriegelungsleitung 11 zuführbar ist. Abhängig von dem Entriegelungssignal ist das Stellsignal in seiner Wirkung auf den Stellantrieb 2 durch das Schaltelement 8 freigebbar und auch sperrbar. Durch die Anordnung des Schaltelements 8 zwischen der ersten Recheneinheit 4 und dem Stellantrieb 2 kann das Freigeben und das Sperren des Stellsignals abhängig von dem Entriegelungssignal unabhängig von einem Betriebszustand der ersten Recheneinheit 4 erfolgen.

Das Entriegelungssignal kann ferner dazu benutzt werden, die erste Recheneinheit 4 zu aktivieren. Beispielsweise wird zum Aktivieren der ersten Recheneinheit 4 dieser eine Versorgungsspannung zugeführt oder die erste Recheneinheit 4 wird aus einem Ruhezustand aufgeweckt, so dass sie ihren Betrieb aufnimmt. Das Entriegelungssignal ist beispielsweise ein einfaches Ein-/Aussignal, das das Stellsignal freigibt und die erste Recheneinheit 4 aktiviert, wenn ein Signalpegel auf der Entriegelungsleitung 11 einen vorgegebenen Pegel übersteigt, also einen High-Pegel einnimmt, und das Stellsignal sperrt, wenn der Signalpegel auf der Entriegelungsleitung 11 unter einen weiteren vorgegebenen Pegel fällt, also einen Low-Pegel einnimmt. Das Entriegelungssignal kann jedoch auch anders ausgebildet sein.

In einem fehlerfreien Zustand der ersten Recheneinheit 4 wird diese nach einem Zurücknehmen des Entriegelungssignals, also z.B. durch den Low-Pegel auf der Entriegelungsleitung 11, deaktiviert. In einem fehlerhaften Zustand der ersten Recheneinheit 4 kann jedoch nicht sichergestellt werden, dass die erste Recheneinheit 4 durch das Zurücknehmen des Entriegelungssignals korrekt deaktiviert wird. Dies kann dann dazu führen, dass das Stellsignal weiterhin erzeugt wird. Durch das Sperren des Stellsignals mittels des Schaltelements 8 durch das Zurücknehmen des Entriegelungssignals kann jedoch sichergestellt werden, dass das Ansteuern des Stellantriebs 2 unterbunden wird.

Die zweite Recheneinheit 13 ist ferner ausgebildet zum Erzeugen eines ersten Steuersignals, das der Steuervorrichtung 3 über die erste Steuerleitung 9 zuführbar ist. Mit dem ersten Steuersignal ist der ersten Recheneinheit 4 ein Steuerbefehl zuführbar. Die Steuervorrichtung 3 ist ausgebildet, abhängig von dem Steuerbefehl das Stellsignal zum Ansteuern des Stellantriebs 2 zu erzeugen. Vorzugsweise sind die übergeordnete Steuereinheit 12, die Steuervorrichtung 3 und die erste Steuerleitung 9 Teil eines Controller Area Network, kurz: CAN, das beispielsweise in Kraftfahrzeugen benutzt wird. Das Übertragen des Steuerbefehls über die erste Steuerleitung 9 kann jedoch auch anders erfolgen.

Die übergeordnete Steuereinheit 12 kann ferner ausgebildet sein, ein zweites Steuersignal zu erzeugen und über die zweite Steuerleitung 10 an die Steuervorrichtung 3 zu übertragen. Mit dem zweiten Steuersignal kann der Steuerbefehl über die zweite Steuerleitung 10 redundant zu der Übertragung über die erste Steuerleitung 9 an die Steuervorrichtung 3 übertragen werden. Über diese zwei voneinander unabhängigen Kommunikationskanäle ist der Steuerbefehl so besonders zuverlässig von der übergeordneten Steuereinheit 12 an die Steuervorrichtung 3 übertragbar.

Vorzugsweise ist die erste Recheneinheit 4 ausgebildet zum Überprüfen der jeweils über die erste und die dritte Schnittstelleneinheit 5, 7 empfangenen Steuerbefehle. Die erste Recheneinheit 4 kann dann beispielsweise eine Notsteuerfunktion frei schalten, wenn der Steuerbefehl nur entweder von der ersten oder von der dritten Schnittstelleneinheit 5, 7 empfangbar ist oder wenn die jeweils über die erste und die dritte Schnittstelleneinheit 5, 7 empfangenen Steuerbefehle unterschiedlich oder fehlerhaft sind. Dadurch kann ein sicherer Betrieb der Steuervorrichtung 3 und des Stellantriebs 2 sichergestellt werden. Beispielsweise kann sichergestellt werden, dass das Bremsen des Kraftfahrzeugs mit der elektrisch steuerbaren Bremse auch dann noch möglich ist, wenn der der ersten Steuerleitung 9 zugeordnete oder der der zweiten Steuerleitung 10 zugeordnete Kommunikationskanal nicht verfügbar sein sollte, z.B. aufgrund eines Defekts.

Vorzugsweise ist der Steuerbefehl in dem zweiten Steuersignal frequenzkodiert. Beispielsweise wird der Steuerbefehl zum Anziehen der Bremse durch eine Wechselspannung mit einer ersten vorgegebenen Frequenz übertragen und der Steuerbefehl zum Lösen der Bremse durch eine Wechselspannung mit einer zweiten vorgegebenen Frequenz übertragen. Für weitere Steuerbefehle können Wechselspannungen mit jeweils einer weiteren vorgegebenen Frequenz vorgesehen sein.

Die erste Schnittstelleneinheit 5 und die dritte Schnittstelleneinheit 7 sind vorzugsweise ausgebildet zum Senden von Daten mittels eines Datensignals von der ersten Recheneinheit 4 zu der übergeordneten Steuereinheit 12. Beispielsweise kann so eine Bestätigung zu einem empfangenen Steuerbefehl oder ein Zustand der Steuervorrichtung 3, des Stellantriebs 2 oder der elektrisch steuerbaren Bremse 1 an die übergeordnete Steuereinheit 12 übertragen werden. Ferner kann eine Eingabeinformation übertragen werden, die der Steuervorrichtung 3 über eine gegebenenfalls vorgesehene Eingabeeinheit zuführbar ist, die z.B. an einer Mittelkonsole des Kraftfahrzeugs zum manuellen Steuern der elektrisch steuerbaren Bremse 1 angeordnet ist.

Vorzugsweise ist die dritte Schnittstelleneinheit 7 oder die erste Recheneinheit 4 ausgebildet zum Erzeugen eines Aktivitätssignals, das der übergeordneten Steuereinheit 12 über die zweite Steuerleitung 10 zuführbar ist. Die übergeordnete Steuereinheit 12 ist ausgebildet, das Aktivitätssignal zu empfangen. Durch das Empfangen des Aktivitätssignals ist die übergeordnete Steuereinheit 12 darüber informiert, dass der Kommunikationskanal über die zweite Steuerleitung 10 zu der Steuervorrichtung 3 verfügbar ist und dass die Steuervorrichtung 3 beziehungsweise die erste Recheneinheit 4 den Steuerbefehl empfangen kann. Kann das Aktivitätssignal von der übergeordneten Steuereinheit 12 jedoch nicht empfangen werden, dann kann die übergeordnete Steuereinheit 12 gegebenenfalls eine Meldung dieser Fehlfunktion veranlassen, z.B. indem eine entsprechende Fehlermeldung dem Fahrer des Kraftfahrzeugs auf einer geeigneten Anzeigevorrichtung präsentiert wird.

Das Aktivitätssignal kann pulsförmig oder auch kontinuierlich an die übergeordnete Steuereinheit 12 übertragen werden. Das pulsförmige Aktivitätssignal ist vorzugsweise so ausgebildet, dass jeweils zwei aufeinander folgende Pulse maximal in einem vorgegebenen maximalen Abstand zueinander beabstandet sind. Bevorzugt sind das Aktivitätssignal oder Daten in dem Datensignal frequenzkodiert. Das pulsförmige Aktivitätssignal ist dann beispielsweise aus einer Schwingungsperiode oder mehreren Schwingungsperioden einer Wechselspannung mit einer vorgegebenen Frequenz gebildet.

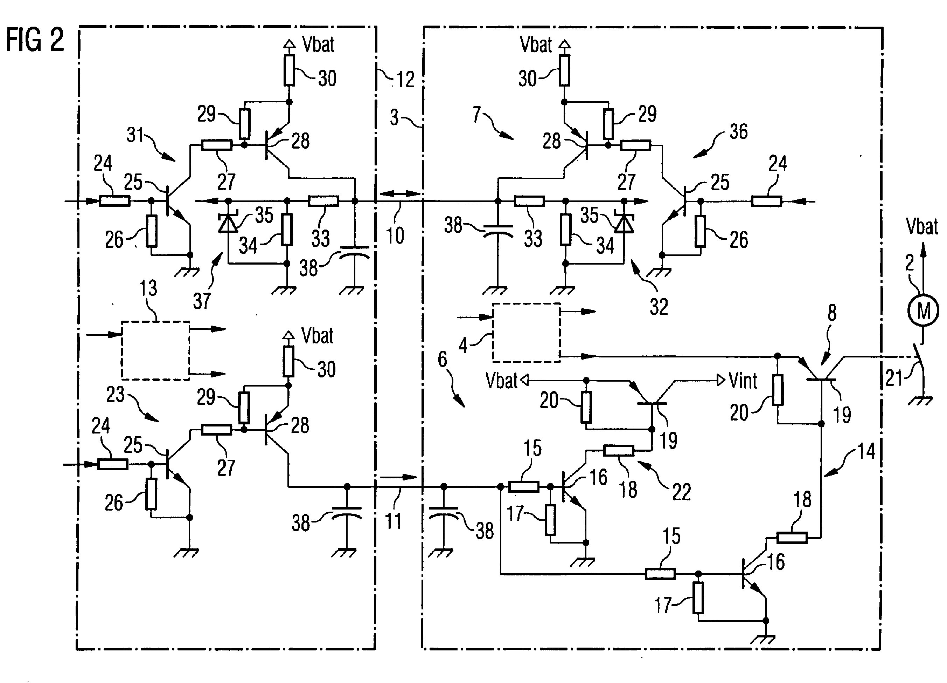

Figur 2 zeigt eine Ausführungsform der Steuervorrichtung 3 und der übergeordneten Steuereinheit 12. Die Steuervorrichtung 3 umfasst eine erste Schaltungsanordnung 14, die einen ersten Widerstand 15 und einen ersten Transistor 16 umfasst. Der erste Widerstand 15 ist elektrisch zwischen der Entriegelungsleitung 11 und einem Basisanschluss des ersten Transistors 16 angeordnet. Ein zweiter Widerstand 17 verbindet den Basisanschluss mit einem Emitteranschluss des ersten Transistors 16. Der Emitteranschluss des ersten Transistors 16 ist ferner mit einem Massepotenzial verbunden. Ein dritter Widerstand 18 ist elektrisch zwischen einem Kollektoranschluss des ersten Transistors 16 und einem Basisanschluss eines zweiten Transistors 19 angeordnet. Ein vierter Widerstand 20 verbindet den Basisanschluss des zweiten Transistors 19 mit einem Emitteranschluss des zweiten Transistors 19. Der Emitteranschluss des zweiten Transistors 19 ist mit einem Ausgangsanschluss der ersten Recheneinheit 4 gekoppelt. Ein Kollektoranschluss des zweiten Transistors 19 ist mit einem Leistungsschalter 21 koppelbar. Der Leistungsschalter 21 ist elektrisch zwischen dem Stellantrieb 2 und dem Massepotenzial angeordnet. Der zweite Transistor 19 der ersten Schaltungsanordnung 14 bildet somit das Schaltelement 8.

Die Steuervorrichtung 3 umfasst ferner eine zweite Schaltungsanordnung 22, die der ersten Schaltungsanordnung 14 entspricht. Jedoch ist der Emitteranschluss des zweiten Transistors 19 in der zweiten Schaltungsanordnung 22 mit einer Batteriespannung Vbat gekoppelt und der Kollektoranschluss des zweiten Transistors 19 bildet einen Anschluss für eine interne Versorgungsspannung Vint. Die interne Versorgungsspannung Vint kann beispielsweise einem Spannungsregler zugeführt werden, der dann der ersten Recheneinheit 4 die geeignete Versorgungsspannung zuführen kann.

Der zweite Transistor 19 schaltet durch, wenn die Entriegelungsleitung 11 den High-Pegel aufweist, und erlaubt in der zweiten Schaltungsanordnung 22 einen Stromfluss von einer Batterie zu der ersten Recheneinheit 4 und somit ein Aktivieren der ersten Recheneinheit 4. Entsprechend gibt der zweite Transistor 19 bzw. das Schaltelement 8 in der ersten Schaltungsanordnung 14 das Stellsignal von der ersten Recheneinheit 4 zu dem Leistungsschalter 21 frei, so dass der Stellantrieb 2 ansteuerbar ist. Weist die Entriegelungsleitung 11 jedoch den Low-Pegel auf, dann ist der zweite Transistor 19 oder das Schaltelement 8 gesperrt. Das Stellsignal kann so nicht mehr von der ersten Recheneinheit 4 zu dem Leistungsschalter 21 gelangen, so dass der Stellantrieb nicht ansteuerbar ist. Der High-Pegel entspricht beispielsweise etwa der Batteriespannung Vbat, die z.B. etwa 12 Volt beträgt. Der Low-Pegel entspricht beispielsweise etwa Null Volt.

Die übergeordnete Steuereinheit 12 umfasst eine dritte Schaltungsanordnung 23, die einen fünften Widerstand 24 und einen dritten Transistor 25 aufweist. Der fünfte Widerstand 24 ist elektrisch zwischen einem Ausgangsanschluss der zweiten Recheneinheit 13 und einem Basisanschluss des dritten Transistors 25 angeordnet. Ein sechster Widerstand 26 verbindet den Basisanschluss des dritten Transistors 25 mit einem Emitteranschluss des dritten Transistors 25. Der Emitteranschluss des dritten Transistors 25 ist ferner mit dem Massepotenzial verbunden. Ein siebter Widerstand 27 ist elektrisch zwischen einem Kollektoranschluss des dritten Transistors 25 und einem Basisanschluss eines vierten Transistors 28 angeordnet. Ein achter Widerstand 29 verbindet den Basisanschluss des vierten Transistors 28 mit einem Emitteranschluss des vierten Transistors 28. Der Emitteranschluss des vierten Transistors 28 ist über einen neunten Widerstand 30 mit der Batteriespannung Vbat gekoppelt. Ein Kollektoranschluss des vierten Transistors 28 ist mit der Entriegelungsleitung 11 gekoppelt.

Die dritte Schaltungsanordnung 23 ist ausgebildet zum Senden des Entriegelungssignals über die Entriegelungsleitung 11 und die erste und die zweite Schaltungsanordnung 14, 22 sind ausgebildet zum Empfangen des Entriegelungssignals von der übergeordneten Steuereinheit 12. Dadurch kann die zweite Recheneinheit 13 der übergeordneten Steuereinheit 12 das Entriegelungssignal über die dritte Schaltungsanordnung 23 und die Entriegelungsleitung 11 der ersten und der zweiten Schaltungsanordnung 14, 22 zuführen. Insbesondere kann die zweite Recheneinheit dadurch das Stellsignal für den Stellantrieb 2 freigeben oder sperren unabhängig von dem Betriebszustand der ersten Recheneinheit 4.

Die übergeordnete Steuereinheit 12 umfasst ferner eine vierte Schaltungsanordnung 31, die der dritten Schaltungsanordnung 23 entspricht. Jedoch ist der fünfte Widerstand 24 der vierten Schaltungsanordnung 31 mit einem weiteren Ausgangsanschluss der zweiten Recheneinheit 13 gekoppelt und der Kollektoranschluss des vierten Transistors 28 ist mit der zweiten Steuerleitung 10 gekoppelt. Die vierte Schaltungsanordnung 31 ist ausgebildet zum Senden des Steuersignals über die zweite Steuerleitung 10. Zum Empfangen des Steuersignals umfasst die Steuervorrichtung 3 eine fünfte Schaltungsanordnung 32. Die fünfte Schaltungsanordnung 32 umfasst einen zehnten Widerstand 33, einen elften Widerstand 34 und eine Zenerdiode 35. Der zehnte Widerstand 33 ist elektrisch zwischen der zweiten Steuerleitung 10 und einem Eingangsanschluss der ersten Recheneinheit 4 angeordnet. Der elfte Widerstand 34 und die Zenerdiode 35 bilden eine Parallelschaltung, die elektrisch zwischen dem Eingangsanschluss der ersten Recheneinheit 4 und dem Massepotenzial angeordnet ist. Dadurch ist das zweite Steuersignal von der zweiten Recheneinheit 13 der übergeordneten Steuereinheit 12 über die vierte Schaltungsanordnung 31, die zweite Steuerleitung 10 und die fünfte Schaltungsanordnung 32 der ersten Recheneinheit 4 zuführbar.

Die Steuervorrichtung 3 umfasst ferner eine sechste Schaltungsanordnung 36, die der dritten Schaltungsanordnung 23 entspricht. Jedoch ist in der sechsten Schaltungsanordnung 36 der fünfte Widerstand 24 mit einem weiteren Ausgangsanschluss der ersten Recheneinheit 4 gekoppelt. Die sechste Schaltungsanordnung 36 ist ferner ausgebildet zum Senden des Datensignals über die zweite Steuerleitung 10 an die übergeordnete Steuereinheit 12. Zum Empfangen des Datensignals umfasst die übergeordnete Steuereinheit 12 eine siebte Schaltungsanordnung 37, die der fünften Schaltungsanordnung 32 entspricht. Jedoch ist der zehnte Widerstand 33 elektrisch zwischen der zweiten Steuerleitung 10 und einem Eingangsanschluss der zweiten Recheneinheit 13 angeordnet. Dadurch ist das Datensignal und/oder das Aktivitätssignal von der ersten Recheneinheit 4 der Steuervorrichtung 3 über die sechste Schaltungsanordnung 36, die zweite Steuerleitung 10 und die siebte Schaltungsanordnung 37 der zweiten Recheneinheit 4 zuführbar.

Die zweite Schnittstelleneinheit 6 umfasst die erste und die zweite Schaltungsanordnung 14, 22 und die dritte Schnittstelleneinheit 7 umfasst die fünfte und die sechste Schaltungsanordnung 32, 36.

Vorzugsweise sind die erste Recheneinheit 4 und die zweite Recheneinheit 13 ausgebildet zum Erzeugen des Datensignals und/oder des Aktivitätssignals bzw. des Steuersignals durch Erzeugen von Wechselspannungen unterschiedlicher Frequenz abhängig von dem jeweils zu übertragenden Datum bzw. Steuerbefehl. Das Datensignal, das Aktivitätssignal und/oder das Steuersignal können jedoch auch anders ausgebildet sein und das jeweils zu übertragende Datum, die Aktivität bzw. den Steuerbefehl anders kodieren.

Die zweite Steuerleitung 10 und die Entriegelungsleitung 11 können jeweils auf Seite der Steuervorrichtung 3 oder der übergeordneten Steuereinheit 12 mit einem Kondensator 38 mit dem Massepotenzial gekoppelt sein zum Kurzschließen von hochfrequenten Störungen, die in die zweite Steuerleitung 10 oder die Entriegelungsleitung 11 einstreuen können.

Die Steuervorrichtung 3 und das System aus der Steuervorrichtung 3 und der übergeordneten Steuereinheit 12 ist besonders geeignet zum sicheren und zuverlässigen Ansteuern des Stellantriebs 2 in der elektrisch steuerbaren Bremse 1. Jedoch kann anstelle des Stellantriebs 2 in der elektrisch steuerbaren Bremse 1 auch ein beliebiger anderer Stellantrieb zuverlässig und sicher angesteuert werden.

## Patentansprüche

1. Steuervorrichtung, die mit einem Stellantrieb (2) koppelbar ist und die ausgebildet ist zum Ansteuern des Stellantriebs (2) und die umfasst
- eine erste Schnittstelleneinheit (5), über die der Steuervorrichtung (3) ein erstes Steuersignal zuführbar ist, das repräsentativ ist für einen Steuerbefehl und
- eine erste Recheneinheit (4), die mit der ersten Schnittstelleneinheit (5) gekoppelt ist zum Empfangen des Steuerbefehls und zum Erzeugen eines Stellsignals zum Ansteuern des Stellantriebs (2) abhängig von dem Steuerbefehl,
**dadurch gekennzeichnet, dass**
- eine zweite Schnittstelleneinheit (6), über die der Steuervorrichtung (3) ein Entriegelungssignal zuführbar ist, und
- ein Schaltelement (8) vorgesehen sind, das so elektrisch zwischen der ersten Recheneinheit (4) und dem Stellantrieb (2) angeordnet ist und mit der zweiten Schnittstelleneinheit (6) gekoppelt ist, dass das Stellsignal in seiner Wirkung auf den Stellantrieb (2) abhängig von dem Entriegelungssignal freigebbar und sperrbar ist, und zwar unabhängig von einem Betriebszustand der ersten Recheneinheit (4).

2. Steuervorrichtung nach Anspruch 1, die so ausgebildet ist, dass die erste Recheneinheit (4) durch das Entriegelungssignal aktiviert wird.

3. Steuervorrichtung nach einem der vorstehenden Ansprüche, die eine dritte Schnittstelleneinheit (7) umfasst, die mit der ersten Recheneinheit (4) gekoppelt ist und über die der Steuervorrichtung (3) ein zweites Steuersignal zuführbar ist, das repräsentativ ist für den Stellbefehl.

4. Steuervorrichtung nach Anspruch 3, bei der der Steuerbefehl in dem zweiten Steuersignal frequenzkodiert ist und die erste Recheneinheit (4) oder die dritte Schnittstelleneinheit (7) ausgebildet ist zum Ermitteln des Steuerbefehls aus dem zweiten Steuersignal abhängig von einer Frequenz des zweiten Steuersignals.

5. Steuervorrichtung nach einem der Ansprüche 3 oder 4, bei der die erste Recheneinheit (4) ausgebildet ist zum Überprüfen der jeweils über die erste und die dritte Schnittstelleneinheit (5, 7) empfangenen Steuerbefehle und zum Freischalten einer Notsteuerfunktion, wenn der Steuerbefehl nur entweder von der ersten oder von der dritten Schnittstelleneinheit (5, 7) empfangen wird oder wenn die jeweils über die erste und die dritte Schnittstelleneinheit (5, 7) empfangenen Steuerbefehle unterschiedlich oder fehlerhaft sind.

6. Steuervorrichtung nach einem der Ansprüche 3 bis 5, bei der die dritte Schnittstellenvorrichtung (7) ausgebildet ist zum Senden eines Aktivitätssignals und/oder eines Datensignals von der ersten Recheneinheit (4) an eine übergeordnete Steuereinheit (12), die mit der Steuervorrichtung (3) koppelbar ist.

7. Steuervorrichtung nach Anspruch 6, die so ausgebildet ist, dass das Aktivitätssignal pulsförmig und maximal in einem vorgegebenen maximalen Abstand zueinander beabstandet oder kontinuierlich über die dritte Schnittstelleneinheit (7) an die übergeordnete Steuereinheit (12) gesendet wird.

8. Steuervorrichtung nach einem der Ansprüche 6 oder 7, bei der das Aktivitätssignal oder Daten in dem Datensignal frequenzkodiert sind und die erste Recheneinheit (4) oder die dritte Schnittstelleneinheit (7) ausgebildet ist zum Erzeugen des Aktivitätssignals bzw. des Datensignals abhängig von einer dem Aktivitätssignal bzw. dem jeweiligen Datum zugeordneten Frequenz.

## Claims

1. Control apparatus which can be coupled to an actuator (2) and which is designed to actuate the actuator (2) and which comprises
- a first interface unit (5), via which the control apparatus (3) can be supplied with a first control signal which is representative of a control command, and
- a first computation unit (4), which is coupled to the first interface unit (5) for the purpose of receiving the control command and for the purpose of producing an actuating signal for actuating the actuator (2) on the basis of the control command,
**characterized in that**
- a second interface unit (6), via which the control apparatus (3) can be supplied with an unlocking signal, and
- a switching element (8) are provided, said switching element being arranged between the first computation unit (4) and the actuator (2), and coupled to the second interface unit (6), electrically such that the actuating signal can have its action on the actuator (2) enabled and disabled on the basis of the unlocking signal, specifically regardless of an operating state of the first computation unit (4).

2. Control apparatus according to Claim 1, which is in a form such that the first computation unit (4) is activated by the unlocking signal.

3. Control apparatus according to one of the preceding claims, which comprises a third interface unit (7) which is coupled to the first computation unit (4) and via which the control apparatus (3) can be supplied with a second control signal which is representative of the actuating command.

4. Control apparatus according to Claim 3, in which the control command in the second control signal is frequency-coded, and the first computation unit (4) or the third interface unit (7) is designed to ascertain the control command from the second control signal on the basis of a frequency of the second control signal.

5. Control apparatus according to one of Claims 3 and 4, in which the first computation unit (4) is designed to check the respective control commands received via the first and the third interface unit (5, 7) and to activate an emergency control function if the control command is received only either from the first or from the third interface unit (5, 7) or if the respective control commands received via the first and the third interface unit (5, 7) are different or erroneous.

6. Control apparatus according to one of Claims 3 to 5, in which the third interface apparatus (7) is designed to send an activity signal and/or a data signal from the first computation unit (4) to a superordinate control unit (12) which can be coupled to the control apparatus (3).

7. Control apparatus according to Claim 6, which is in a form such that the activity signal is sent to the superordinate control unit (12) in pulsed fashion and at most at a prescribed maximum distance apart or continuously via the third interface unit (7).

8. Control apparatus according to one of Claims 6 and 7, in which the activity signal or data in the data signal is/are frequency-coded and the first computation unit (4) or the third interface unit (7) is designed to produce the activity signal or the data signal on the basis of a frequency which is associated with the activity signal or the respective data item.

## Revendications

1. Dispositif de commande qui peut être couplé à un actionneur ( 2 ) et qui est constitué pour commander l'actionneur ( 2 ) et qui comprend
- une première unité ( 5 ) d'interface par laquelle un premier signal de commande, qui est représentatif d'une instruction de commande, peut être envoyé au dispositif ( 3 ) de commande et
- une première unité ( 4 ) de calcul qui est couplée à la première unité ( 5 ) d'interface pour la réception de l'instruction de commande et pour la production d'un signal de réglage pour commander l'actionneur ( 2 ) en fonction de l'instruction de commande,
**caractérisé en ce qu'**il est prévu
- une deuxième unité ( 6 ) d'interface par laquelle un signal de déverrouillage peut être envoyé au dispositif ( 3 ) de commande et
- un élément ( 8 ) de commutation qui est monté électriquement entre la première unité ( 4 ) de calcul et l'actionneur ( 2 ) et qui est couplé à la deuxième unité ( 6 ) d'interface de manière à ce que le signal de réglage puisse être, dans son action pour l'actionneur ( 2 ), libéré et bloqué en fonction du signal de déverrouillage et cela indépendamment d'un état de fonctionnement de la première unité ( 4 ) de calcul.

2. Dispositif de commande suivant la revendication 1, qui est constitué de manière à ce que la première unité ( 4 ) de calcul soit activée par le signal de déverrouillage.

3. Dispositif de commande suivant l'une des revendications précédentes, qui comprend une troisième unité ( 7 ) d'interface qui est couplée à la première unité de calcul et par laquelle un deuxième signal de commande, qui est représentatif de l'instruction de réglage, peut être envoyé au dispositif ( 3 ) de commande.

4. Dispositif de commande suivant la revendication 3, dans lequel 1"instruction de commande est codée en fréquence dans le deuxième signal de commande et la première unité ( 4 ) de calcul ou la troisième unité ( 7 ) d'interface est constituée de manière à déterminer l'instruction de commande à partir du deuxième signal de commande en fonction d'une fréquence du deuxième signal de commande.

5. Dispositif de commande suivant l'une des revendications 3 ou 4, dans lequel la première unité ( 4 ) de calcul est constituée pour contrôler les instructions de commande reçues par l'intermédiaire de la première et de la troisième unité ( 5, 7 ) d'interface et pour déconnecter une fonction de commande d'urgence lorsque l'instruction de commande n'est reçue que par la première ou par la troisième unité ( 5, 7 ) d'interface et lorsque les instructions de commande reçues par la première et par la troisième unité ( 5, 7 ) d'interface sont différentes ou défectueuses.

6. Dispositif de commande suivant l'une des revendications 3 à 5, dans lequel le troisième dispositif ( 7 ) d'interface est conçu pour envoyer un signal d'activité et/ou un signal de données de la première unité ( 4 ) de calcul à une unité ( 12 ) de commande qui est supérieure hiérarchiquement et qui peut être couplée au dispositif ( 3 ) de commande.

7. Dispositif de commande suivant la revendication 6 qui est constitué de manière à ce que les signaux d'activité soient envoyés sous forme pulsée en étant à distance entre eux au maximum d'une distance maximum prescrite ou soient envoyés en continu à l'unité ( 12 ) de commande supérieure hiérarchiquement par l'intermédiaire de l'unité ( 7 ) d'interface.

8. Dispositif de commande suivant l'une des revendications 6 ou 7, dans lequel les signaux d'activité ou des données sont codés en fréquence dans le signal de données et la première unité ( 4 ) de calcul ou la troisième unité ( 7 ) d'interface est constituée de manière à produire le signal d'activé le signal ou donnée en fonction d'une fréquence associée au signal d'activité ou à la donnée respective.
